# EUROPEAN PATENT SPECIFICATION

(11) **EP 4 338 957 B1**
(45) Date of publication and mention of the grant of the patent: **06.08.2025**
(21) Application number: 23193243.5
(22) Date of filing: 24.08.2023
(51) Int. Cl.: B32B 37/14, B29D 24/00, E04C 2/34, E06B 3/84

(54) **METHOD FOR THE PRODUCTION OF A PANEL FOR A FURNISHING ELEMENT**
VERFAHREN ZUR HERSTELLUNG EINER PLATTE FÜR EIN EINRICHTUNGSELEMENT
PROCÉDÉ DE FABRICATION D'UN PANNEAU POUR UN ÉLÉMENT D'AMEUBLEMENT

(30) Priority: 25.08.2022 IT 202200017625
(43) Date of publication of application: 20.03.2024
(73) Proprietor: Imab Group S.p.A., 61033 Fermignano (PU) (IT)
(72) Inventor: Bruscoli, Gianfranco, 61029 Urbino (PU) (IT)
(74) Representative: Petraz, Davide Luigi

(56) References cited:
- EP-B1- 2 524 799
- WO-A1-2015/036654
- CA-A1- 2 874 973
- CN-A- 105 835 435
- DE-U1- 202020 004 311
- ARBEITSBERICHT HAMBURG ET AL: "Bundesforschungsanstalt für Forst-und Holzwirtschaft Wabenplatten für den Möbelbau Bundesforschungsanstalt für Forst-und Holzwirtschaft", 30 April 2005 (2005-04-30), pages 15 - 15, XP093033795, Retrieved from the Internet <URL:https://literatur.thuenen.de/digbib_extern/dk040247.pdf> [retrieved on 20230322]

## Description

### FIELD OF THE INVENTION

The present invention relates to a method for the production of a panel for a furnishing element which can be applied, for example but without limitation to the generality, in the furniture sector for the realization of a furnishing element such as, for example, a door, a shelf or a wall of a piece of furniture. This panel can also be used, possibly in combination with others, to create partition walls for interiors or fixed or floating floors.

### BACKGROUND OF THE INVENTION

Panels for furnishing elements are known that comprise two embellished external layers between which a central, lightened layer is disposed, such as for example a layer of paper, or cardboard, shaped like honeycomb.

A first method for the production of said known panels involves cutting to size a raw starting panel, for example made of plywood, chipboard or MDF, to obtain two layers that will form the two external layers.

The two cut to size layers are subsequently embellished one at a time by sheets of paper, paints, laminates or other surface coatings.

In addition, the known method provides for disposing and gluing between the two external and embellished layers a layer of lightened material, such as for example a layer shaped like honeycomb, which acts as a filler.

One exemplary method to produce such a panel is disclosed in EP 2 524 799.

In some cases, it is also known to connect an external frame, which acts as a spacer, at the perimeter of the two external layers, to stiffen the panel.

Alternatively, another method for the manufacture of such known panels provides for directly embellishing two raw layers having an extension greater than that desired to be given to the final panel. In addition, the method also provides for disposing and gluing between the two embellished layers a lightened central layer, also having a greater extension than that which is intended to be given to the final panel, to obtain a starting panel. In this case, the method also comprises cutting the starting panel to size to obtain a final panel having the desired dimensions.

However, the embellishing of the two external layers can also take place after their assembly to form the panel.

Although widely used, the known methods have some shortcomings.

One shortcoming of the known methods is that they comprise a large number of steps which, consequently, increase both the final cost of the panel and the time required for its production.

Another shortcoming of the known methods is that they require a large amount of raw material to be stored, thus also increasing the associated storage costs.

There is therefore the need to perfect a method for producing a panel for a furnishing element and a related panel that can overcome at least one of the shortcomings of the state of the prior art.

In particular, one purpose of the present invention is to solve the technical problem of devising a method for the production of a panel for a furnishing element, which is economical, fast to perform and which comprises few processing steps.

Another purpose of the present invention is to provide a panel for a furnishing element having both a pleasant aesthetic appearance and a low weight.

Another purpose of the present invention is to provide a panel for a furnishing element that can be readily used in the construction of furniture or doors and windows. Especially in the case of furniture, this panel can be made with a certain thickness depending on the part of the furniture to be composed, to ensure desired resistance characteristics (load-bearing capacity) and/or for fixing or assembly requirements.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, a method according to the present invention allows a panel to be produced comprising two external layers between which is disposed at least one central layer having a specific weight between about 40 kg/m³ and about 450 kg/m³.

In accordance with one aspect of the present invention, the method comprises:
- a first step of supplying a first panel having two embellishing layers between which a support layer is disposed;
- a second step of supplying said at least one central layer;
- a division step in which said first panel is divided with respect to a plane passing through said support layer so as to obtain said two external layers, each of which has a support portion and an embellishing portion;
- an assembly step in which said at least one central layer is disposed between said two external layers.

In accordance with another aspect of the present invention, the method also comprises a first cutting to size step in which said first panel is cut in plan.

In accordance with another aspect of the present invention, the method also comprises a second cutting to size step in which said at least one central panel is cut in plan.

In accordance with another aspect of the present invention, said second supply step provides for supplying two central layers to obtain a panel that can have multiple final thicknesses.

In accordance with one embodiment of the present invention, said assembly step provides for disposing said two central layers on each other and between said two external layers.

In accordance with another embodiment of the present invention, the method also provides for a third supply step in which a reinforcement layer is supplied, which may be a reinforcement panel, and said assembly step provides for both disposing said reinforcement panel between two central layers, and disposing said two central layers between said two external layers.

The present disclosure also relates to a panel obtained with the method for a furnishing element, not encompassed by the strict wording of the claims but considered as useful for understanding the invention since within the scope of protection that results from the method according to the invention, and which comprises at least one central layer and two external layers each of which comprises a support portion and an embellishing portion.

In accordance with another aspect of the present invention, said at least one central layer has a specific weight comprised between about 40 kg/m³ and about 450 kg/m³.

In accordance with another aspect of the present invention, said at least one central layer comprises a honeycomb-shaped central portion and two flat lateral portions, between which said central portion is disposed.

According to one embodiment of the present invention, said panel comprises at least two central layers, both disposed between said external layers.

According to one embodiment of the present invention, between said two central layers there is interposed a reinforcement layer comprising elements, or fibres, derived from wood, aggregated together.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic view of the steps of a method in accordance with one embodiment of the present invention;
- fig. 2 is a front view of a panel in accordance with one embodiment, not encompassed by the strict wording of the claims but considered as useful for understanding the invention since within the scope of protection that results from the method according to the invention;
- fig 3 is an enlarged detail of fig. 2;
- fig. 4 is a lateral section of the panel of fig. 2;
- figs. 5 and 6 are two lateral sections of respective embodiments of the panel.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

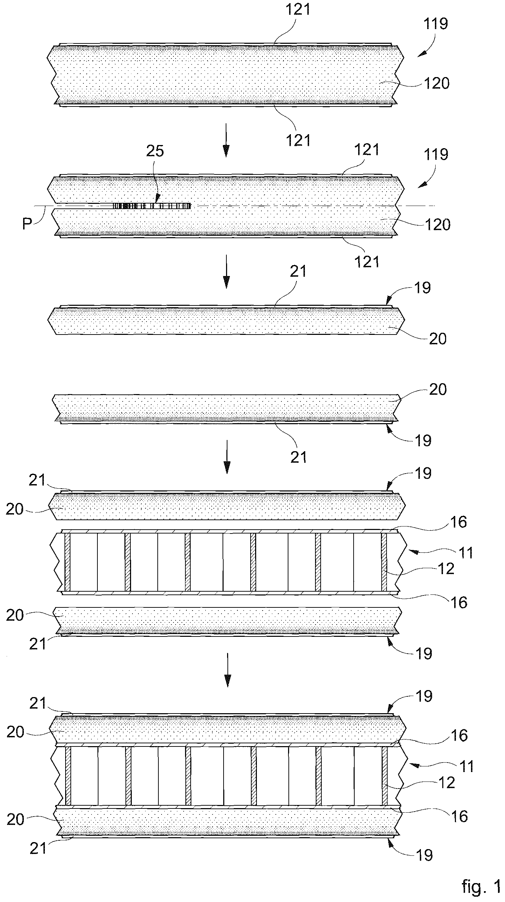

With reference to fig. 1, the present invention refers to a method for the production of a panel 10 for a furnishing element such as, for example, a door, a shelf or a wall of a piece of furniture.

The method comprises a first supply step in which a first panel 119 is supplied having two embellishing layers 121 between which a support layer 120 is disposed.

The support layer 120 consists essentially of elements, or fibres, derived from wood, aggregated together, and having an average size between about 10 mm and about 30 mm.

For example, the support layer 120 is of chipboard, or plywood, or MDF, or other similar material. Instead, the two embellishing layers 121 may include preimpregnated papers, paints, CPL laminates, HPL, or other similar materials.

Optionally, the density of the support layer 120 is lower on the inside thereof and higher in the vicinity of the embellishing layers 121. Here and hereinafter, "density" means the concentration of said elements, or fibres, i.e. the quantity of said elements, or fibres, in a given volume considered.

Alternatively, the support layer 120 is compact and has a uniform density throughout its volume.

Preferably, the first panel 119 is of a standard type and readily commercially available. Advantageously, this makes it possible to obtain the panel 10 with a reduction in the costs of the raw materials used for its construction. This also makes it possible to considerably reduce stocks of raw materials to be stored and related storage costs.

The method also provides for a second supply step in which at least one central layer 11 is supplied, lightened, and having a specific weight between about 40 kg/m³ and about 450 kg/m³.

Preferably, the central layer 11 is "sandwich" shaped and comprises an honeycomb inner portion 12 and two flat external portions 16 glued on two opposite surfaces of the inner portion 12. Preferably, the lateral portions 16 are fixed to the central portion by means of ecological glues and comprise a sheet of paper, recycled paper, cardboard or aluminium.

Alternatively, the central layer 11 may consist essentially of a layer of expanded material such as, for example, polyurethane, polystyrene and/or sandwich panels made of materials other than paper and cardboard.

The thickness S1 of the central layer 11 is between about 8 mm and about 60 mm and is much less than its width W and its height H. Exemplarily, its width W can be between about 100 mm and about 1350 mm and its height H is between about 200 mm and about 3200 mm.

The quantity of central layers 11 supplied in the second supply step is a function of the total thickness to be given to the panel 10.

In fact, optionally, in the second supply step, two or more central layers 11 can also be supplied to be superimposed on one another and which can have a different thickness from one another.

This allows the range of thicknesses of the panel 10 obtainable with the method of the present invention to be expanded, as will be explained below.

The method also provides for a first cutting to size step in which the first panel 119 is cut in plan to give it the final measurements desired for the panel 10.

The method also provides for a second cutting to size step in which the at least one central layer 11 is cut in plan to give it the desired final measurements for the panel 10.

According to one aspect of the present invention, the method also provides a division step in which said first panel 119 is divided into two parts with respect to a plane P passing through said support layer 120 so as to obtain two external layers 19 for the panel 10.

In particular, each of its external layers 19 obtained from the cutting step comprises a support portion 20, consisting of a portion of the support layer 120 of the first panel 119, and an embellishing portion 21 consisting of an embellishing layer 121 of the first panel 119.

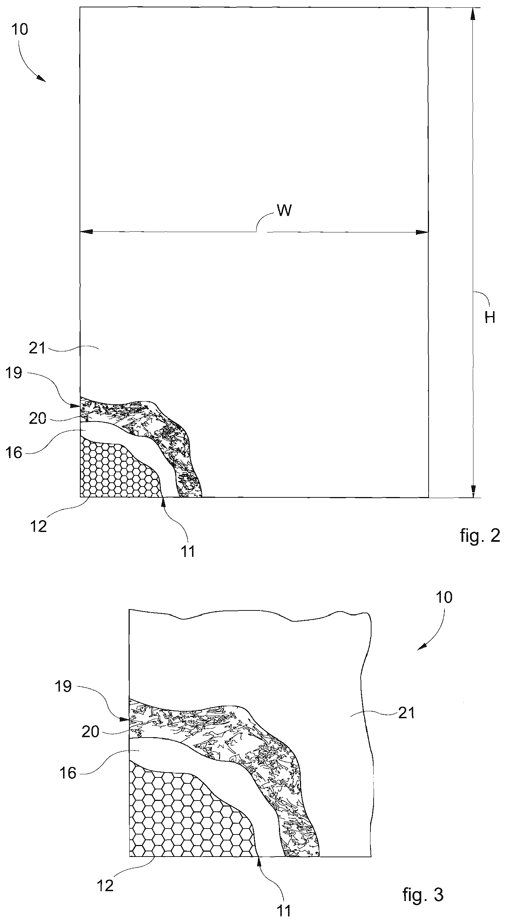

The thickness S2 (fig. 3) of the support portion 20 is preferably between about 4 mm and about 13 mm and the thickness S3 of the embellishing portion 21 is greater than 0.1 mm and preferably between about 0.075 mm and about 1.8 mm. Therefore, each of the external layers 19 has a thickness of about 4.1 mm to about 14.8 mm.

Advantageously, said division step allows the number of operations necessary for the realization of the panel 10 to be decreased as the external layers 19 are already made to size and already embellished. This greatly reduces the costs of making the panel 10 and therefore also its price to the public.

In addition, this also greatly reduces the electrical energy for the production of the panel 10 with consequent economic and environmental advantages.

In addition, starting from a single first panel 119, and dividing it in half at said division step makes it possible to decrease the costs of raw materials for its production, as well as the costs related to their storage.

Preferably, said division step is performed after the first step of cutting to size.

Furthermore, said plane P constitutes a plane of symmetry for said first panel 119 and, therefore, for said support layer 120.

Said cutting step is carried out, for example, by means of cutting means 25 comprising a cutting disc, or a band saw or other similar or comparable devices.

In the event that the density of the support layer 120 is lower inside and higher near the embellishing layers 121, two external layers 19 having density increasing in the direction of their thickness S2 will be obtained from the cutting step.

Alternatively, if the density of the support layer 120 is constant, two external layers 19 having constant density will be obtained in the cutting step.

Subsequently, the method also comprises the assembly step in which the at least one central layer 11 is disposed between the two external layers 19 obtained in the cutting step.

If only one central layer 11 is supplied in the first supply step, the two external layers 19 are glued to each lateral portion 16 thereof.

Alternatively, if two or more central layers 11 are supplied in the first supply step, they are disposed one on top of the other and glued together. In this case, the two external layers 19 are glued to the external lateral portion 16 of the two outermost central layers 11.

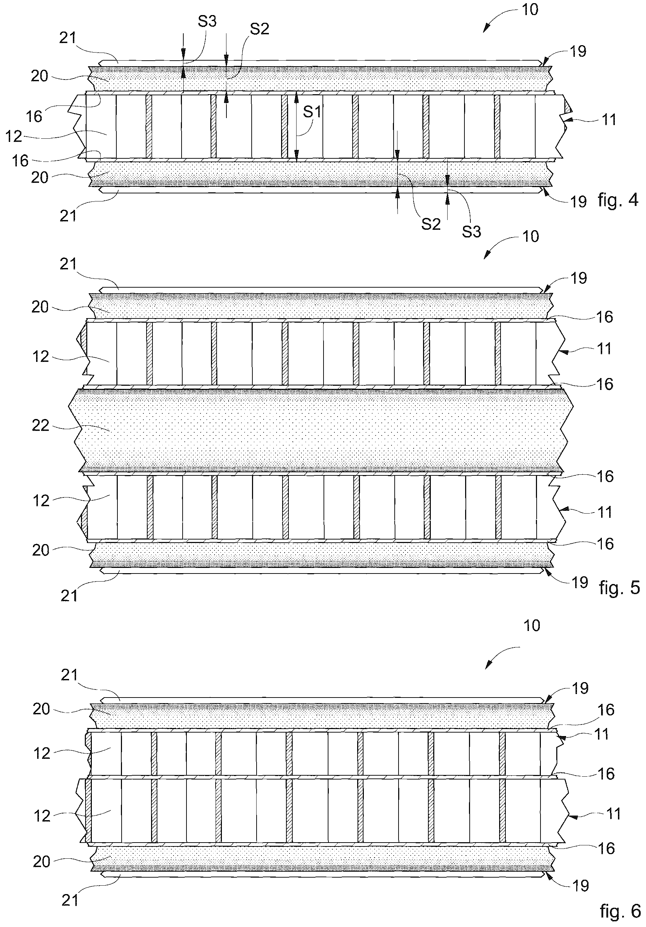

By way of example, in fig. 6 a panel 10 is shown supplied with two superimposed central layers 11, to each of which a respective external layer 19 is glued.

The two superimposed central layers 11 may have a different thickness from each other. Advantageously, this expands the range of thicknesses that can be given to the panel 10. In fact, by combining in a different way two types of central layers 11 having a different thickness from each other, it is possible to give the panel 10 four different final thickness values.

Optionally, the method can also comprise a third supply step in which a reinforcement layer 22, which can be a panel, is supplied, which has a greater strength than the central layers 11. In fact, the reinforcement layer 22 is suitable for cooperating with external fixing elements such as, for example, screws or pins necessary for the assembly of the panel 10 in a furnishing element.

The reinforcement layer 22 may comprise elements, or fibres, derived from wood, aggregated together and may be a layer of chipboard, or plywood, or MDF, or other like, similar or comparable material.

In this case, the method may also comprise a third step of cutting to size in which the reinforcement panel 22 is cut in plan to give it the desired final measurements for the panel 10.

Moreover, in this case, the assembly step also provides for disposing the reinforcement panel 22 between two central layers 11, and gluing it thereto, as schematically shown in fig. 5.

It is clear that modifications and/or additions of parts may be made to the panel 10 and to the method as described heretofore, without departing from the field and scope of the present invention, as defined by the claims.

It is also clear that, although the present invention has been described with reference to some specific examples, a person of skill in the art shall certainly be able to achieve other equivalent forms of a panel and a respective method for the production of the panel, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Method for producing a panel (10) which comprises two external layers (19) between which at least one central layer (11) is disposed having a specific weight comprised between 40 kg/m³ and 450 kg/m³, said method comprising
- a first step of supplying a first panel (119) having two embellishing layers (121) between which a support layer (120) is disposed;
- a second step of supplying said at least one central layer (11); **said** method being **characterized in that** it comprises:
- a division step in which said first panel (119) is divided with respect to a plane (P) passing through said support layer (120) so as to obtain said two external layers (19), each of which has a support portion (20) and an embellishing portion (21);
- an assembly step in which said at least one central layer (11) is disposed between said two external layers (19).

2. Method as in claim 1, **characterized in that** it also comprises a first cutting to size step in which said first panel (119) is cut in plan to give it certain measurements.

3. Method as in claim 1 or 2, **characterized in that** it also comprises a second cutting to size step in which said at least one central panel (11) is cut in plan to give it certain measurements.

4. Method as in any claim hereinbefore, **characterized in that** it comprises said second supply step which provides to supply two central layers (11).

5. Method as in claim 4, **characterized in that** said assembly step provides to dispose said two central layers (11) one on top of the other and between said two external layers (19).

6. Method as in claim 4, **characterized in that** it also comprises a third supply step in which a reinforcement layer (22) is supplied, **and in that** said assembly step provides both to dispose said reinforcement layer (22) between said two central layers (11) and also to dispose said two central layers (11) between said two external layers (19).

7. Method as in any claim hereinbefore, **characterized in that** said at least one central layer (11) comprises a central portion (12) with a honeycomb conformation and two flat lateral portions (16) between which said central portion (12) is disposed.

## Patentansprüche

1. Verfahren zur Herstellung einer Platte (10), die zwei Außenschichten (19) umfasst, zwischen denen mindestens eine mittlere Schicht (11) mit einem spezifischen Gewicht zwischen 40 kg/m³ und 450 kg/m³ angeordnet ist, wobei das Verfahren umfasst:
- einen ersten Schritt, in dem eine erste Platte (119) mit zwei Zierschichten (121), zwischen denen eine Trägerschicht (120) angeordnet ist, bereitgestellt wird;
- einen zweiten Schritt, in dem die mindestens eine mittlere Schicht (11) bereitgestellt wird;
wobei das Verfahren **dadurch gekennzeichnet ist, dass** es umfasst:
- einen Trennschritt, in dem die erste Platte (119) in Bezug auf eine Ebene (P), die durch die Trägerschicht (120) verläuft, geteilt wird, um die beiden Außenschichten (19) zu erhalten, von denen jede einen Trägerabschnitt (20) und einen Zierabschnitt (21) aufweist;
- einen Montageschritt, in dem die mindestens eine mittlere Schicht (11) zwischen den beiden Außenschichten (19) angeordnet wird.

2. Verfahren nach Anspruch 1, **dadurch gekennzeichnet, dass** es außerdem einen ersten Zuschneideschritt umfasst, in dem die erste Platte (119) in der Draufsicht zugeschnitten wird, um ihr bestimmte Maße zu geben.

3. Verfahren nach Anspruch 1 oder 2, **dadurch gekennzeichnet, dass** es außerdem einen zweiten Zuschneideschritt umfasst, in dem die mindestens eine mittlere Platte (11) in der Draufsicht zugeschnitten wird, um ihr bestimmte Maße zu geben.

4. Verfahren nach einem der vorstehenden Ansprüche, **dadurch gekennzeichnet, dass** in dem zweiten Bereitstellungsschritt zwei mittlere Schichten (11) bereitgestellt werden.

5. Verfahren nach Anspruch 4, **dadurch gekennzeichnet, dass** in dem Montageschritt die beiden mittleren Schichten (11) übereinander und zwischen den beiden Außenschichten (19) anordnet werden.

6. Verfahren nach Anspruch 4, **dadurch gekennzeichnet, dass** es außerdem einen dritten Bereitstellungsschritt umfasst, in dem eine Verstärkungsschicht (22) bereitgestellt wird, und dass der Montageschritt sowohl die Anordnung der Verstärkungsschicht (22) zwischen den beiden mittleren Schichten (11) als auch die Anordnung der beiden mittleren Schichten (11) zwischen den beiden Außenschichten (19) vorsieht.

7. Verfahren nach einem der vorstehenden Ansprüche, **dadurch gekennzeichnet, dass** die mindestens eine mittlere Schicht (11) einen mittleren Abschnitt (12) mit einer Wabenstruktur und zwei flache seitliche Abschnitte (16), zwischen denen der mittlere Abschnitt (12) angeordnet ist, umfasst.

## Revendications

1. Procédé de fabrication d'un panneau (10) qui comprend deux couches externes (19) entre lesquelles est disposée au moins une couche centrale (11) présentant un poids spécifique compris entre 40 kg/m³ et 450 kg/m³, ledit procédé comprenant
- une première étape de fourniture d'un premier panneau (119) présentant deux couches d'embellissement (121) entre lesquelles une couche de support (120) est disposée ;
- une deuxième étape de fourniture de ladite au moins une couche centrale (11) ; ledit procédé étant **caractérisé en ce qu'**il comprend :
- une étape de division dans laquelle ledit premier panneau (119) est divisé par rapport à un plan (P) passant à travers ladite couche de support (120) de manière à obtenir lesdites deux couches externes (19), chacune présentant une partie de support (20) et une partie d'embellissement (21) ;
- une étape d'assemblage dans laquelle ladite au moins une couche centrale (11) est disposée entre lesdites deux couches externes (19).

2. Procédé selon la revendication 1, **caractérisé en ce qu'**il comprend également une première étape de découpe à la taille dans laquelle ledit premier panneau (119) est découpé en plan pour lui donner certaines mesures.

3. Procédé selon la revendication 1 ou 2, **caractérisé en ce qu'**il comprend également une seconde étape de découpe à la taille dans laquelle ledit au moins un panneau central (11) est découpé en plan pour lui donner certaines mesures.

4. Procédé selon l'une quelconque des revendications précédentes, **caractérisé en ce qu'**il comprend ladite deuxième étape de fourniture qui prévoit une fourniture de deux couches centrales (11).

5. Procédé selon la revendication 4, **caractérisé en ce que** ladite étape d'assemblage prévoit de disposer lesdites deux couches centrales (11) l'une sur l'autre et entre lesdites deux couches externes (19).

6. Procédé selon la revendication 4, **caractérisé en ce qu'**il comprend également une troisième étape de fourniture dans laquelle une couche de renforcement (22) est fournie, et **en ce que** ladite étape d'assemblage prévoit à la fois de disposer ladite couche de renforcement (22) entre lesdites deux couches centrales (11) et également de disposer lesdites deux couches centrales (11) entre lesdites deux couches externes (19).

7. Procédé selon l'une quelconque des revendications précédentes, **caractérisé en ce que** ladite au moins une couche centrale (11) comprend une partie centrale (12) avec une conformation en nid d'abeilles et deux parties latérales plates (16) entre lesquelles ladite partie centrale (12) est disposée.
